# EUROPÄISCHE PATENTSCHRIFT

(11) **EP 1 414 661 B1**
(45) Veröffentlichungstag und Bekanntmachung des Hinweises auf die Patenterteilung: **19.01.2005**
(21) Anmeldenummer: 02776923.1
(22) Anmeldetag: 07.08.2002
(51) Int. Cl.: B60J 10/00, F16J 15/00

(54) **MONTAGEVORRICHTUNG FÜR DICHTUNGSPROFILE**
ASSEMBLY DEVICE FOR SEALING SECTIONS
DISPOSITIF DE POSE POUR JOINTS D'ETANCHEITE PROFILES

(30) Priorität: 09.08.2001 DE 10138141
(43) Veröffentlichungstag der Anmeldung: 06.05.2004
(73) Patentinhaber: Grohmann Engineering GmbH, 54595 Prüm (DE)
(72) Erfinder: THOMMES, Lothar, 54597 Matzerath (DE); KOHLEN, Bernhard, 54636 Ingendorf (DE); GROHMANN, Klaus, 54597 Hersdorf (DE)
(74) Vertreter: Kohlmann, Kai, Dipl.-Ing.
(86) Internationale Anmeldenummer: PCT/EP2002/008836
(87) Internationale Veröffentlichungsnummer: WO 2003/013891

(56) Entgegenhaltungen:
- EP-A- 0 778 172
- DE-A- 4 401 092
- DE-A- 19 904 183

## Beschreibung

Die Erfindung betrifft ein Segment für eine Vorrichtung zum automatisierten Einbringen von Dichtungsprofilen an Fahrzeugkarosserien mit mindestens einem Trageelement für das Dichtungsprofil, wobei das Segment ein lageveränderliches, in mindestens einer Position arretierbares Stützelement aufweist, das in der arretierten Position an dem von jedem Tragelement gehaltenen Dichtungsprofil zur Anlage kommt.

Bekannte Vorrichtungen bestehen aus einem Basisgestell an dem mindestens eine Applikationsplatte, beispielsweise in ergonomischer Schräglage befestigt ist. Derartige Vorrichtungen mit Applikationsplatten gehören zum Stand der Technik. Sie nehmen das zu montierende Dichtungsprofil auf und dienen der automatischen Applikation des Dichtungsprofils an der Fahrzeugkarosserie, beispielsweise einer Türdichtung an einer Automobiltür.

Die zumeist paarweise angeordneten Applikationsplatten sind für eine Türdichtungsmontage in 3-dimensionaler Form entsprechend der Form der Türen ausgeführt. Jede Applikationsplatte ist regelmäßig in einen oberen und einen unteren Bereich aufgeteilt, die über ein Scharnier miteinander verbunden sind. Das Scharnier verläuft in Höhe der Fensterunterkante der Türe, so dass der obere Bereich an die individuelle Form der mit einem Dichtungsprofil zu bestückenden Tür angelegt werden kann.

Die beiden Platten werden so angefertigt, dass sie sich vollständig in die Linie einer automatisierten Produktion integrieren lassen.

Aus der DE 198 37 508 A1 ist ein Montagerahmen zum Aufsetzen und Andrücken einer schlauchförmigen Dichtung an einer Türe einer Fahrzeugkarosserie bekannt, der eine die schlauchförmige Dichtung aufnehmende, zum Stegblech hin offene im wesentlichen U-förmige Rinne aufweist. Der Montagerahmen weist eine teilweise entfernbare plattenförmige Haltevorrichtung für die Dichtung auf. Die Haltevorrichtung ist verschiebbar geführt, um sie in einen umlaufenden Schlitz der Dichtung einführen zu können. Die Haltevorrichtung dient dem Zweck, vor dem Auflegen der Dichtung auf das Stegblech einen Schutzstreifen von dem Klebestreifen entfernen zu können. Zum Aufsetzen der Dichtung auf das Stegblech wird sie mit einem Fluid befüllt, wodurch sich die in der Rinne gehaltene Dichtung im Querschnitt etwas vergrößert und hierdurch gegen das Stegblech gepresst wird. Die Vorrichtung ist lediglich zum Aufsetzen und Andrücken schlauchförmiger Dichtungen geeignet.

Aus der DE 38 08 443 A1 ist eine Anordnung zum Ankleben von biegeschlaffen Dichtungsprofilen auf Türen von Kraftfahrzeugen bekannt, die aus einer Haltevorrichtung zum Bereitstellen der Dichtungsprofile, einer Anpressvorrichtung zum Andrücken des Profils und einer Positioniereinrichtung besteht. Die Haltevorrichtung weist mit einer Unterdruckquelle verbundene Öffnungen auf. Mittels des Unterdrucks wird das Dichtungsprofil in der Haltevorrichtung gehalten, um beispielsweise das Schutzband des Klebebandes zu entfernen, bevor die Dichtung positioniert und angedrückt wird.

Nachteilig bei den herkömmlichen Vorrichtungen ist, dass bestimmte Abschnitte des einzusetzenden Dichtungsprofils, insbesondere eine mit dem Profilfuß verbundene instabile Lippe, von den bekannten Segmenten nicht wirksam unterstützt werden. Diese instabilen Abschnitte können sich verformen und/oder umschlagen und damit den Verarbeitungsprozess nachhaltig behindern.

Ausgehend von diesem Stand der Technik liegt der Erfindung daher die Aufgabe zu Grunde, ein Segment für eine Vorrichtung zum Einbringen von Dichtungsprofilen an Fahrzeugkarosserien sowie eine diese Segmente aufweisende Vorrichtung zu schaffen, die derartige Störungen im Verarbeitungsprozess vermeidet, insbesondere eine exakte Positionierung des Dichtungsprofils bei hoher Wiederholgenauigkeit ermöglicht.

Diese Aufgabe wird bei einem Segment der eingangs erwähnten Art dadurch gelöst, dass das Stützelement als um eine Achse schwenkbarer Hebel mit einem eine Anlagefläche aufweisenden Stützkopf ausgebildet ist und eine verschieblich angeordnete Rolle zum Arretieren des Hebels an einer der Anlagefläche abgewandeten Seite des Hebels zur Anlage bringbar ist.

Wenn das Segment eine dem Dichtungsprofil angepasste Anlagefläche aufweist, in der sich mindestens eine mit einem Unterdruckerzeuger verbundene Öffnung befindet, lässt sich wirksam ein Abkippen des instabilen Abschnitts von der Anlagefläche verhindern.

Eine Vorrichtung zum Einbringen von Dichtungsprofilen an Fahrzeugkarosserien weist ein Gestell auf, an dem mindestens eine Applikationsplatte mit mehreren der Form des anzubringenden Dichtungsprofils folgenden Segmenten befestigt ist. Die Segmente weisen erfindungsgemäß ausgestaltete, lageveränderliche, in mindestens einer Position arretierbare Stützelemente auf, die in der arretierten Position an dem von jedem Tragelement gehaltenen Dichtungsprofil zur Anlage kommen.

Weitere vorteilhafte Ausgestaltungen der Erfindung ergeben sich aus den Unteransprüchen sowie der Beschreibung des nachfolgenden Ausführungsbeispiels.

Nachfolgend wird die Erfindung anhand verschiedener Schnittzeichnungen der Segmente in unterschiedlichen Phasen der Montage eines Dichtungsprofils näher erläutert. Es zeigen:

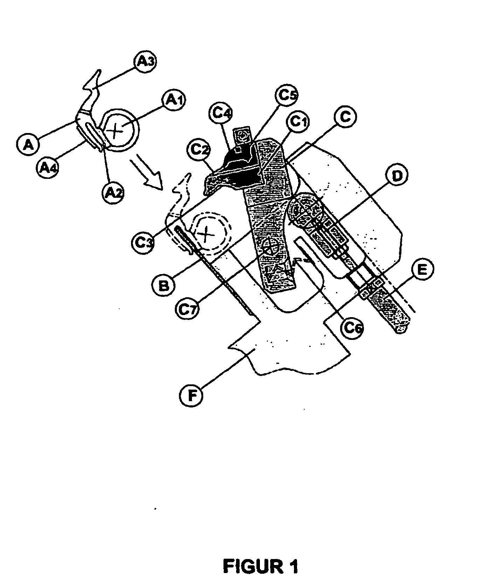

- **Figur 1**: das Einlegen eines Dichtungsprofils in ein erfindungsgemäßes Segment,
- **Figur 2**: das Schließen und Fixieren eines Stützelementes an einem erfindungsgemäßen Segment,

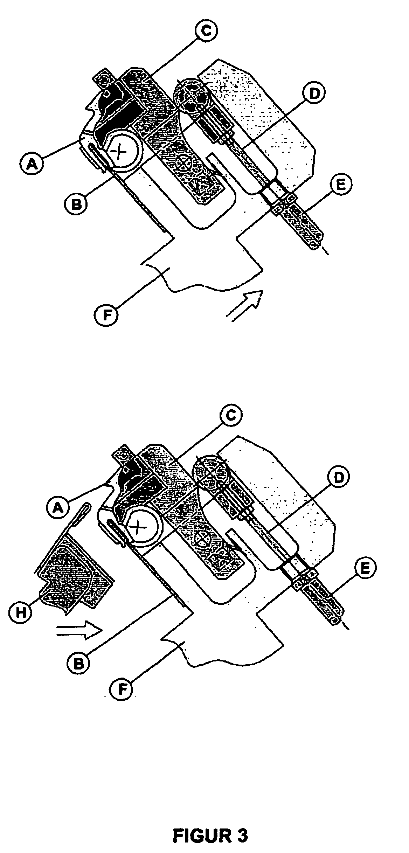

- **Figur 3**: das Spreizen des Dichtungsprofils und das Einlegen einer Tür,

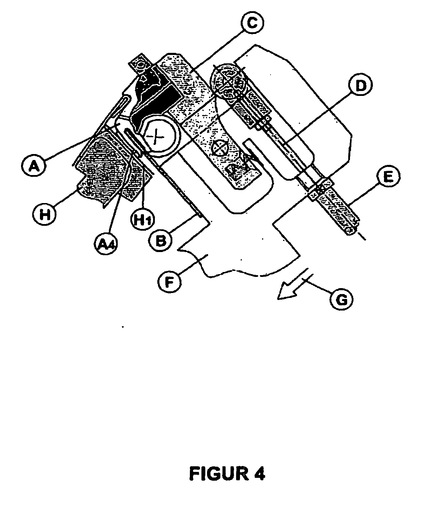

- **Figur 4**: die Applikation des Dichtungsprofils an der Tür,

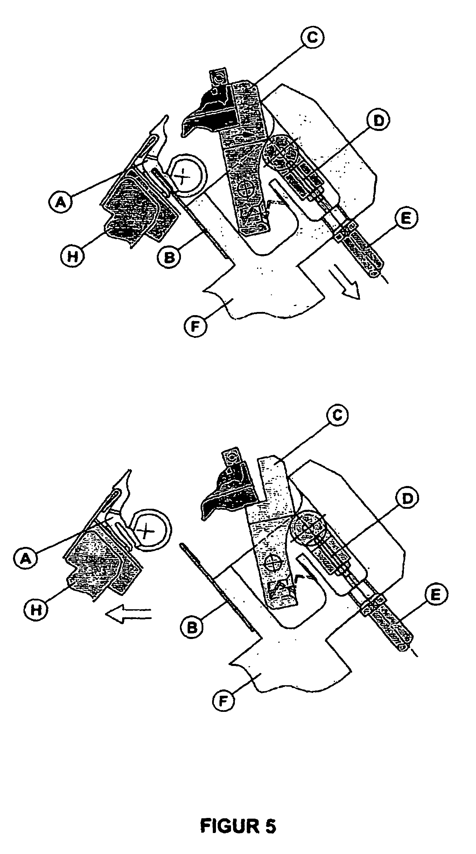

- **Figur 5**: das Öffnen des Stützelementes und Entladen der Tür,
- **Figur 6**: eine Übersicht über die Montage gemäß Fig. 1 - 5,

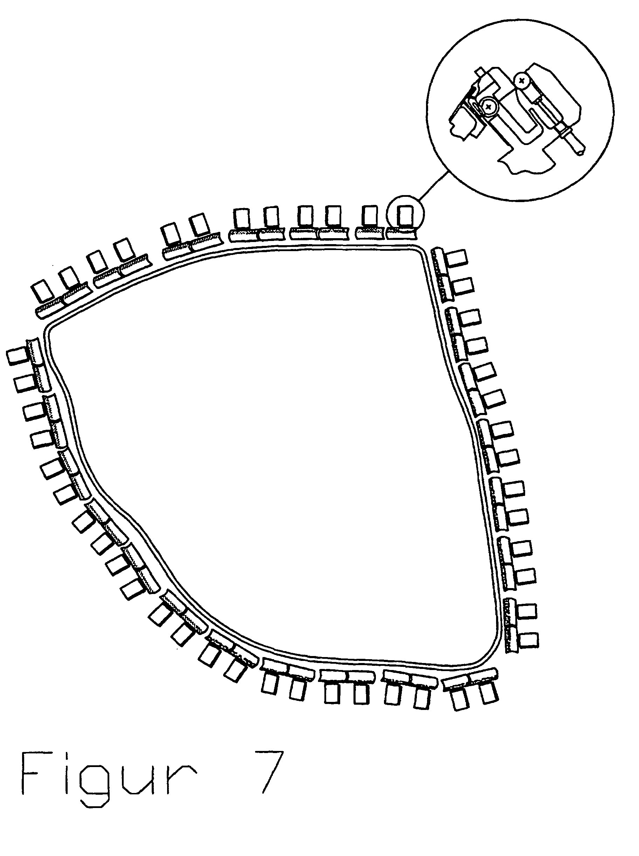

- **Figur 7**: eine Vorrichtung zur Türdichtungsmontage.

### Phase 1) Dichtungsprofil A einlegen

Das Dichtungsprofil A besteht aus einer Hohlkammer A1, einem Profilfuß mit einer Handhabungsnute A2 sowie einer instabilen Lippe A3. An der der Hohlkammer A2 abgewandten Seite der Handhabungsnute A2 befindet sich ein Klebestreifen A4, der auf die Fahrzeugtüre H aufgeklebt werden soll.

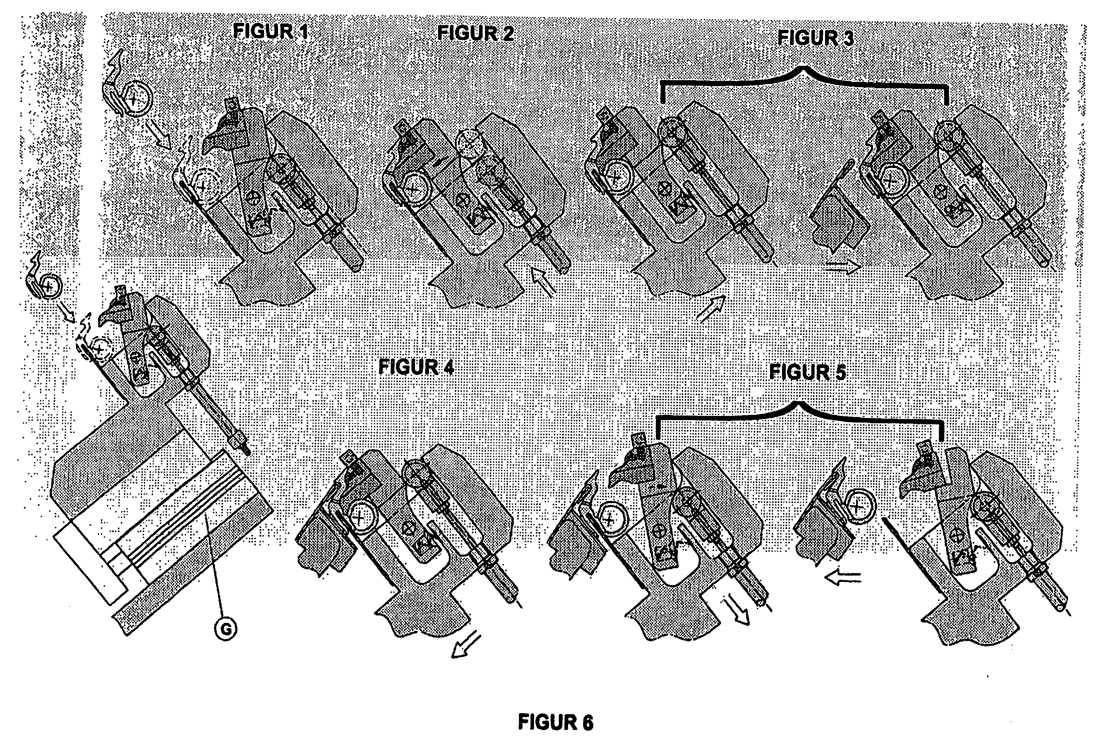

Das blockförmige Segment F umfasst ein aus Blech bestehendes Trageelement B, eine auf einem Pneumatikzylinder E verschieblich angeordnete Rolle D zum Verriegeln eines um eine Achse C7 drehbaren Stützelementes C gegen die Federkraft einer an dem Stützelement C angreifenden Rückstellfeder C6. Eine Vielzahl derartiger Segmente F sind jeweils auf einem in Figur 6 dargestellten Linearführungsschlitten G mit integriertem Pneumatikzylinder nebeneinander, der Form des anzubringenden Dichtungsprofils A folgend auf der nicht dargestellten Applikationsplatte angeordnet. Mittels der Linearführungsschlitten lassen sich die Segmente aufeinanderzugbewegen, um das Dichtungsprofil problemlos einlegen zu können, und voneinander weg bewegen, um das Profil für die Verklebung zu spreizen.

Zunächst wird die Handhabungsnute A2 des Profilfußes auf das Tragelement B aufgesteckt, auf der das Dichtungsprofil A sicher in Position gehalten wird.

### Phase 2: Stützelement C schließen und fixieren

Nach dem Aufstecken wird das Stützelement C manuell oder optional automatisch geschlossen. Ein stirnseitig an dem Stützelement C angeordneter Stützkopf C1 weist eine dem Profil der Lippe A3 entsprechende Anlagefläche C2 sowie eine Ausmuldung C3 zur teilweisen Aufnahme der Hohlkammer A1 des Dichtungsprofils A auf. In der Anlagefläche C2 befindet sich eine Öffnung C4 eines Vakuumkanals C5, der mit einem nicht dargestellten Vakuumerzeuger verbunden ist, der gleichzeitig sämtliche oder doch zumindest mehrere Segmente F der Vorrichtung mit Unterdruck versorgen kann.

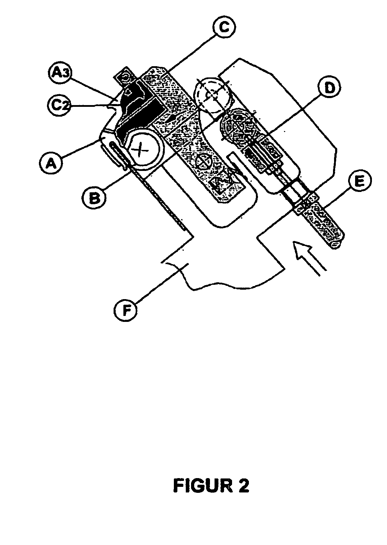

Die nach dem Schließen der Stützelemente C auf der Anlagefläche C2 aufliegende Lippe A3 der Profildichtung wird nun mittels Vakuum angesaugt und damit sicher auf der Anlagefläche C2 fixiert. Sobald eine korrekte Vakuumansaugung vorliegt, wird die Rolle D mittels des Pneumatikzylinders E automatisch aus der in Figur 2 dargestellten schattierten Ruheposition in die vordere, nicht schattiert dargestellte Verriegelungsposition vorgeschoben, so dass die Rolle D an dem Stützelement C anliegt.

### Phase 3: Dichtungsprofil Spreizen und Tür Einlegen

Sobald das Dichtungsprofil A umlaufend komplett eingelegt und die Stützelemente C geschlossen sind, kann das Dichtungsprofil mittels der Linearführungsschlitten gespreizt werden, damit die Türe H eingelegt werden kann.

### Phase 4: Applikation des Dichtungsprofils

Nach dem Einlegen der Türe H in die Vorrichtung wird das Dichtungsprofil A automatisch über den Klebestreifen A4 mit der Klebefläche H1 an der Türe H verklebt. Über den in dem Linearführungsschlitten angeordneten Pneumatikzylinder wird jedes Segment F senkrecht zur Klebefläche in Richtung des Pfeiles G bewegt. Die eingelegten Dichtungsprofile A werden durch diese Bewegung präzise und mit definierter Kraft an der Klebefläche H1 der Türe appliziert.

Durch die speziell auf das Dichtungsprofil abgestimmten Stützelemente und die aktive Unterstützung insbesondere instabiler Abschnitte des Dichtungsprofils wird erfindungsgemäß gewährleistet, dass das Hohlprofil A1 widerholgenau an der Klebefläche appliziert und die Lippe A3 zur Abdichtung der Fuge präzise zur Türrahmenbeplankung positioniert wird. Hier kann in Y-Richtung von einer maximal effektiven Toleranz von 0,4 mm zur Türrahmenbeplankung ausgegangen werden, vorrausgesetzt alle Bauteile und Dichtungen lassen aufgrund der Fertigungstoleranzen diese Widerholgenauigkeit zu.

### Phase 5: Stützelemente Öffnen und Tür Entladen

Nach der Applikation des Dichtungsprofils A an der Türe H werden die Stützelemente C der Segmente F durch Zurückziehen des Pneumatikzylinders E automatisch aufgrund der Rückstellkraft der Rückstellfeder C2 geöffnet und die Türe H kann aus der Vorrichtung entnommen werden.

## Patentansprüche

1. Segment für eine Vorrichtung zum automatisierten Einbringen von Dichtungsprofilen (A) an Fahrzeugkarosserien mit mindestens einem Trageelement (B) für das Dichtungsprofil, wobei das Segment (F) ein lageveränderliches, in mindestens einer Position arretierbares Stützelement (C) aufweist, das in der arretierten Position an dem von jedem Tragelement (B) gehaltenen Dichtungsprofil (A) zur Anlage kommt, **dadurch gekennzeichnet, dass** das Stützelement (C) als um eine Achse (C7) schwenkbarer Hebel mit einem eine Anlagefläche (C2) aufweisenden Stützkopf (C1)ausgebildet ist und eine verschieblich angeordnete Rolle (D) zum Arretieren des Hebels an einer der Anlagefläche (C2) abgewandeten Seite des Hebels zur Anlage bringbar ist.

2. Segment nach Anspruch 1, **dadurch gekennzeichnet, dass** das Segment (F) eine dem Dichtungsprofil (A) angepasste Anlagefläche (C2,C3) aufweist, in der sich mindestens eine mit einem Unterdruckerzeuger verbundene Öffnung (C4) befindet.

3. Segment nach Anspruch 1 oder 2, **dadurch gekennzeichnet, dass** das Segment (F) auf einem Linearführungsschlitten mit integriertem Antrieb angeordnet ist.

4. Vorrichtung zum Einbringen von Dichtungsprofilen an Fahrzeugkarosserien mit einem Gestell, an dem mindestens eine Applikationsplatte mit mehreren der Form des anzubringenden Dichtungsprofils (A) folgenden Segmenten befestigt ist, **dadurch gekennzeichnet, dass** mehrere Segmente (F) nach einem der Ansprüche 1 bis 3 auf der Applikationsplatte angeordnet sind.

5. Vorrichtung nach Anspruch 4, **dadurch gekennzeichnet, dass** die Applikationsplatte in einen oberen und einen unteren Bereich aufgeteilt ist, die über ein Scharnier miteinander verbunden sind.

## Claims

1. A segment for a device for the automated introduction of sealing gaskets (A) on vehicle bodies with at least one bearing element (B) for the sealing gasket, whereby the segment (F) has a position-variable support element (C) arrestable in at least one position, which support element in the arrested position rests on the sealing gasket (A) held by each bearing element (B), **characterised in that** the support element (C) is designed as a lever with a support head (C1) having a locating face (C2), said lever being capable of swivelling about an axis (C7), and a displaceably arranged roller (D) for arresting the lever can be made to rest on a side of the lever facing away from the locating face (C2).

2. The segment according to claim 1, **characterised in that** the segment (F) has a locating face (C2, C3) adapted to the sealing gasket (A), in which locating face there is at least one opening (C4) connected to an underpressure generator.

3. The segment according to claim 1 or 2, **characterised in that** the segment (F) is arranged on a linear guide carriage with an integrated drive.

4. A device for the introduction of sealing gaskets on vehicle bodies with a rack, on which there is fixed at least one application plate with several segments following the shape of the sealing gasket (A) to be fitted, **characterised in that** several segments (F) according to any one of claims 1 to 3 are arranged on the application plate.

5. The device according to claim 4, **characterised in that** the application plate is divided into an upper and a lower area, which are connected together by means of a hinge.

## Revendications

1. Segment pour un dispositif pour l'insertion automatique de profilés d'étanchéité (A) sur des carrosseries de véhicules, avec au moins un élément support (B) pour le profilé d'étanchéité, le segment (F) étant muni d'un élément d'appui (C) pouvant être déplacé et bloqué dans au moins une position, qui dans la position bloquée vient s'appliquer sur le profilé d'étanchéité (A) maintenu par chaque élément support (B), **caractérisé en ce que** l'élément d'appui (C) est conçu sous la forme d'un levier pouvant pivoter autour d'un axe (C7), avec une tête d'appui (C1) munie d'une surface d'application (C2) et **en ce qu'**un rouleau (D) disposé de façon déplaçable peut être amené en application sur un côté du levier qui est opposé à la surface d'application (C2), pour le blocage du levier.

2. Segment selon la revendication 1, **caractérisé en ce que** le segment (F) est muni d'une surface d'application (C2, C3) adaptée au profilé d'étanchéité (A), dans laquelle se trouve au moins un orifice (C4) relié à un générateur de dépression.

3. Segment selon la revendication 1 ou 2, **caractérisé en ce que** le segment (F) est disposé sur un chariot de guidage linéaire avec entraînement intégré.

4. Dispositif pour l'insertion de profilés d'étanchéité sur des carrosseries de véhicules avec un châssis, sur lequel est fixé au moins une plaque d'application avec plusieurs segments suivant la forme des profilés d'étanchéité à appliquer, **caractérisé en ce que** plusieurs segments (F) selon l'une des revendications 1 à 3 sont disposés sur la plaque d'application.

5. Dispositif selon la revendication 4, **caractérisé en ce que** la plaque d'application est divisée en une zone supérieure et en une zone inférieure, qui sont reliées entre elles par une charnière.
